# EUROPÄISCHE PATENTSCHRIFT

(11) **EP 2 951 078 B1**
(45) Veröffentlichungstag und Bekanntmachung des Hinweises auf die Patenterteilung: **17.10.2018**
(21) Anmeldenummer: 13818670.5
(22) Anmeldetag: 20.12.2013
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 01.02.2013 DE 102013101045
(43) Veröffentlichungstag der Anmeldung: 09.12.2015
(73) Patentinhaber: ThyssenKrupp Presta Aktiengesellschaft, 9492 Eschen (LI); thyssenkrupp AG, 45143 Essen (DE)
(72) Erfinder: AGBOR, Thomas, 9008 St. Gallen (CH); GEISELBERGER, Thomas, 9008 St. Gallen (CH); FLEISCHER, Martin, CH-9436 Balgach (CH)
(74) Vertreter: thyssenkrupp Intellectual Property GmbH
(86) Internationale Anmeldenummer: PCT/EP2013/003877
(87) Internationale Veröffentlichungsnummer: WO 2014/117800

(56) Entgegenhaltungen:
- DE-A1- 3 636 315
- GB-A- 2 304 865
- JP-A- 2002 002 501

## Beschreibung

Die vorliegende Erfindung betrifft eine Lenksäule für ein Kraftfahrzeug, wobei die Lenksäule eine Lenkspindellagereinheit und eine, in der Lenkspindellagereinheit um eine Lenkspindellängsachse drehbar gelagerte Lenkspindel und eine, zur Befestigung der Lenksäule im Kraftfahrzeug vorgesehene Trageinheit, an der die Lenkspindellagereinheit gehalten ist, aufweist und die Lenkspindellagereinheit ein Gewinde aufweist und mittels eines Motors entlang der Lenkspindellängsachse relativ zur Trageinheit verstellbar ist.

Bei gattungsgemäßen Lenksäulen ist die Position des Lenkrades in Richtung der Lenkspindellängsachse mittels eines Motors verstellbar, um die Position des an der Lenkspindel angebrachten Lenkrades an den jeweiligen Fahrzeuglenker anzupassen.

Eine gattungsgemäße Lenksäule ist z.B. in der DE 36 36 315 A1 gezeigt. In dieser Schrift weist die Lenkspindellagereinheit eine auf ihrer Außenfläche drehbar gelagerte Hülse auf. Diese trägt das Gewinde und greift in eine an der Trageinheit fixierte Mutter ein. Um diese Hülse in Drehbewegung zu versetzen, ist ein elektrischer Motor vorgesehen, welcher die Hülse über eine Schnecke antreibt, um sie um die Lenkspindellängsachse zu drehen. Durch Verdrehen dieser Hülse in der fix an der Trageinheit angeordneten Mutter kommt es zu einer Verstellung der Lenkspindellagereinheit samt der Lenkspindel in Richtung der Lenkspindellängsachse.

Aus der GB 2 304 865 A ist eine Lenksäule mit einem neben der Lenkspindellagereinheit angeordneten Spindeltrieb bekannt. Diese Anordnung beansprucht einen relativ großen Bauraum. Außerdem ist der Antriebsmotor unmittelbar an der Lenkspindellagereinheit befestigt, so dass Betriebsgeräusche und Vibrationen über die Lenkspindel auf das Lenkrad übertragen werden können, was unerwünscht ist.

Aufgabe der Erfindung ist es, eine alternative, möglichst geräuscharme, aber auch wenig Bauraum beanspruchende Art des Antriebs der Lenkspindellagereinheit für ihre Verstellung in Richtung der Lenkspindellängsachse mittels des Motors zur Verfügung zu stellen.

Hierfür sieht die Erfindung eine Lenksäule gemäß Patentanspruch 1 vor.

Diese zeichnet sich dadurch aus, dass die Lenkspindellagereinheit für ihre Verstellung entlang der Lenkspindellängsachse relativ zur Trageinheit mittels zumindest eines Antriebsriemens oder zumindest einer Antriebskette mit dem Motor verbunden ist.

Eine Grundidee der Erfindung ist es somit, die Drehbewegung des Motors über zumindest einen Antriebsriemen oder zumindest eine Antriebskette auf die Lenkspindellagereinheit zu übertragen, so dass diese in Richtung der Lenkspindellängsachse relativ zur Trageinheit verstellt wird, wenn sie entsprechend vom Motor angetrieben wird.

Bei dem Motor handelt es sich vorzugsweise um einen elektrischen Motor. Die Lenkspindel ist vorzugsweise teleskopierbar ausgebildet. Zum Beispiel kann sie zumindest zwei Lenkspindelabschnitte aufweisen, welche gegeneinander unverdrehbar ineinander eingreifen, aber in Richtung der Lenkspindellängsachse relativ zueinander, vorzugsweise ineinander, verschiebbar sind. Das Teil bzw. der Abschnitt der Lenkspindel, welcher den Lenkradanschluss zum Befestigen des Lenkrades trägt, ist günstigerweise so in der Lenkspindellagereinheit gelagert, dass er zwar um die Lenkspindellängsachse drehbar, aber in Richtung der Lenkspindellängsachse nicht gegen die Lenkspindellagereinheit verschiebbar ist. Diese Art der Ausbildung und Lagerung der Lenkspindel in der Lenkspindellagereinheit ist beim Stand der Technik an sich bekannt und muss nicht weiter erläutert werden.

Günstigerweise ist vorgesehen, dass der Motor einen Antriebsrotor aufweist, mit dem er am Antriebsriemen oder an der Antriebskette angreift. Die Lenkspindellagereinheit kann wie auch die Lenkspindel teleskopierbar ausgebildet sein. In diesem Zusammenhang ist es günstig, wenn die Lenkspindellagereinheit mehrteilig ausgebildet ist, wobei die Teile der Lenkspindellagereinheit in Richtung der Lenkspindellängsachse teleskopierbar ineinandergreifend angeordnet sind und das einem Lenkradanschluss der Lenkspindel am nächsten liegende Teil der Lenkspindellagereinheit das Gewinde aufweist. Die genannten Teile der Lenkspindellagereinheit können ebenso wie die gesamte Lenkspindellagereinheit rohrartig ausgebildet sein und entsprechende Abschnitte der Lenkspindel umgreifen bzw. ummanteln.

Das Gewinde, welches der Verstellung der Lenkspindellagereinheit in Richtung der Lenkspindellängsachse dient, ist bei bevorzugten Ausgestaltungsformen außen an der Lenkspindellagereinheit angebracht. Es handelt sich somit vorzugsweise um ein Außengewinde. Alternativ ist es aber auch möglich, dass das genannte Gewinde ein innen in der Lenkspindellagereinheit angebrachtes Innengewinde ist. Die Lenkspindellagereinheit ist meist rohrförmig ausgebildet und ummantelt den oder die in ihr drehbar gelagerten Abschnitte der Lenkspindel. Mittels der Lenkspindel wird die Drehbewegung des Lenkrades auf das Lenkgetriebe und damit auf die entsprechend zur Lenkung vorgesehenen Räder des Fahrzeuges übertragen. Günstigerweise ist das Gewinde jedenfalls in Umfangsrichtung um die Lenkspindellagereinheit umlaufend ausgebildet. Es kann, aber muss dabei nicht zwingend über die gesamte Umfangsrichtung ausgebildet sein. Es ist z.B. auch möglich, das Gewinde in Form von in Umfangsrichtung der Lenkspindellagereinheit voneinander distanzierten Gewindeabschnitten auszubilden. Diese Gewindeabschnitte sind vorzugsweise streifenförmig ausgebildet. Ihre Längserstreckung verläuft günstigerweise parallel zur Lenkspindellängsachse. Um die am Antriebsriemen und/oder der Antriebskette mittels des Motors hervorgerufene Drehbewegung auf das Gewinde der Lenkspindellagereinheit zu übertragen, ist günstigerweise eine Mutter vorgesehen. Die Mutter kann in das Gewinde der Lenkspindellagereinheit eingreifen. Die Mutter kann mittels des Antriebsriemens oder der Antriebskette drehbar sein. Das Gewinde kann an der Lenkspindellagereinheit unverdrehbar fix angeordnet sein. Mit Vorteil ist das Gewinde durch mehrere, mindestens drei, Gewindeabschnitte ausgebildet, von denen bevorzugt einer oder mehrere Gewindeabschnitte in Richtung der Längsachse verschiebbar am Mantelrohr festgelegt sind. Dabei sollte mindestens ein einzelner, bevorzugt genau ein einziger Gewindeabschnitt, in Längsrichtung unverschiebbar am Mantelrohr angeordnet sein, während die anderen Gewindeabschnitte Längsrichtung verschiebbar angeordnet sind. Der Verschiebeweg ist dabei mit Vorteil auf den Abstand zweiter Gewindegänge zueinander begrenzt.

Zur Darstellung der Erfindung ist mit Vorteil ein Riemenspannsystem, das hier nicht in den Figuren veranschaulicht ist, vorgesehen.

Da es zur Bewegung der Lenkspindellagereinheit in Richtung der Lenkspindellängsachse aber letztendlich nur darauf ankommt, dass Mutter und Lenkspindellagereinheit eine Verdrehung relativ zueinander ausführen, gibt es abweichend hiervon auch die alternative Variante, dass die Mutter drehfest an der Trageinheit oder in anderer Weise drehfest am Kraftfahrzeug befestigt ist. Die Lenkspindellagereinheit kann dann, wie an sich in der DE 36 36 315 A1 gezeigt, eine um die Lenkspindellängsachse drehbar gelagerte Hülse aufweisen, welche das Gewinde der Lenkspindellagereinheit trägt. Diese Hülse sollte dann, wie eben auch in der DE 36 36 315 A1 gezeigt, in Richtung der Lenkspindellängsachse gegenüber den anderen Teilen der Lenkspindellagereinheit nicht verschiebbar sein. Der Antrieb dieser drehbaren Hülse der Lenkspindellagereinheit kann dann wiederum mittels des Antriebsriemens und/oder der Antriebskette vom Motor aus erfolgen. In diesen Fällen ist somit das Gewinde nur an der Hülse, aber nicht an den sonstigen Teilen der Lenkspindellagereinheit unverdrehbar fix angeordnet. Bevorzugte Ausgestaltungsformen der Erfindung sehen jedenfalls vor, dass die Mutter ein Innengewinde aufweist, und mit diesem Innengewinde in das Gewinde der Lenkspindellagereinheit eingreift. Wie eingangs bereits erläutert, ist es aber auch denkbar, dass die Mutter ein Außengewinde aufweist, wenn eben die Lenkspindellagereinheit ein Innengewinde aufweist. Im Sinne einer platzsparenden Ausführung ist es jedenfalls günstig, wenn die Lenkspindellagereinheit durch die Mutter hindurchgeführt ist. Um ein Verdrehen der Lenkspindellagereinheit um die Lenkspindellängsachse zu vermeiden, sehen bevorzugte Ausgestaltungsformen der Erfindung vor, dass die Lenkspindellagereinheit mittels einer Verdrehsicherung bezüglich der Lenkspindellängsachse relativ zur Trageinheit unverdrehbar in der Trageinheit gelagert ist. Die Verdrehsicherung verhindert, dass die Lenkspindellagereinheit um die Lenkspindellängsachse relativ zur Trageinheit verdreht wird.

Erfindungsgemäße Lenksäulen können auch Energieaufzehrungselemente bzw. - vorrichtungen für den Crashfall, also für den Fall eines Unfalls, aufweisen. Solche Energieaufzehrungselemente für den Crashfall sind in den verschiedensten Ausgestaltungsformen beim Stand der Technik grundsätzlich bekannt. Bevorzugte Ausgestaltungsformen der Erfindung sehen in diesem Zusammenhang jedenfalls vor, dass die Lenkspindellagereinheit unter Zwischenschaltung eines Schlittens an der Trageinheit gehalten ist, wobei der Schlitten mit der Lenkspindellagereinheit unter Zwischenschaltung eines Energieaufzehrungselementes für den Crashfall verschiebbar an der Trageinheit gelagert ist.

Außerdem können erfindungsgemäße Lenksäulen natürlich auch eine Höhenverstellung der Lenkspindel bzw. Lenkspindellagereinheit relativ zur Trageinheit zulassen. Diese kann rein händisch bedienbar, aber auch motorisch bedienbar ausgestaltet sein. Besonders bevorzugte Ausgestaltungsformen der Erfindung sehen in diesem Zusammenhang vor, dass die erfindungsgemäße Lenksäule einen Höhenverstellmotor aufweist, welcher z.B. entsprechende Höhenverstellspindeln antreibt.

Weitere Merkmale erfindungsgemäßer Varianten werden exemplarisch anhand eines Ausführungsbeispiels der Erfindung in der nachfolgenden Figurenbeschreibung erläutert. Es zeigen:
Fig. 1 und 2 perspektivische Ansichten auf die Lenksäule dieses Ausführungsbeispiels;
Fig. 3 eine Seitenansicht auf die Lenksäule;
Fig. 4 den Schnitt entlang der Schnittlinie AA aus Fig. 3 und
Fig. 5 bis 8 Detaildarstellungen zur erfindungsgemäßen Ausgestaltung dieses Ausführungsbeispiels.

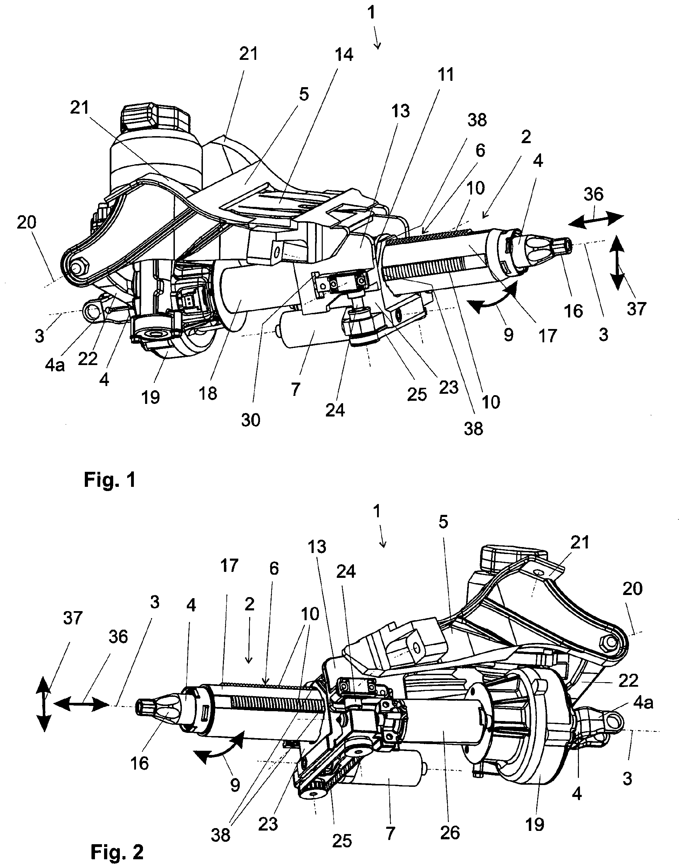

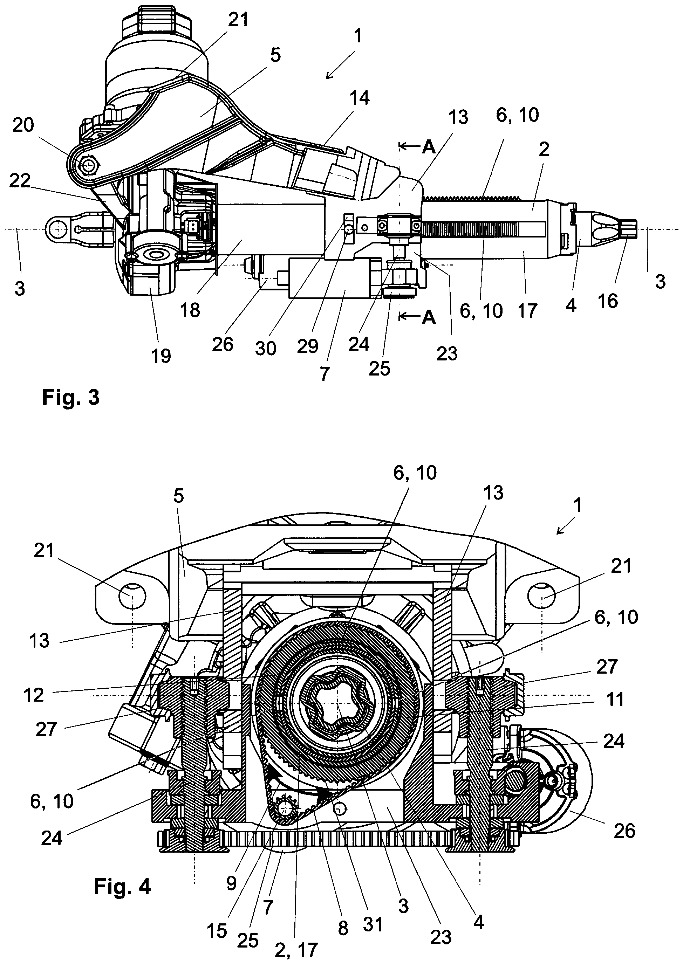

In den Fig. 1 und 2 ist das hier gezeigte erfindungsgemäße Ausführungsbeispiel einer Lenksäule 1 in perspektivischen Darstellungen einmal von schräg oben und das andere Mal von schräg unten dargestellt. Fig. 3 zeigt die Lenksäule 1 in einer Seitenansicht. Es handelt sich bei dem hier gezeigten Ausführungsbeispiel um eine sogenannte elektrisch verstellbare Lenksäule. So kann die Lenkspindellagereinheit 2 zusammen mit der Lenkspindel 4 entlang der Lenkspindellängsachse 3 in den Längsrichtungen 36 mittels des Motors 7 verstellt werden. Zur Höhenverstellung in den Höhenrichtungen 37 dient der Höhenverstellmotor 26. Es handelt sich jeweils um elektrische Motoren. Grundsätzlich ist es möglich, auch andere Motoren einzusetzen, um die im Nachfolgenden im Detail geschilderten Verstellmöglichkeiten zu realisieren.

Die Lenkspindel 4 ist um ihre Lenkspindellängsachse 3 drehbar in der Lenkspindellagereinheit 2 gelagert. In der Regel ist die Lenkspindel 4 mehrteilig ausgebildet. Sie umfasst meist auch Gelenkteile, wie die im Beispiel gezeigte Gabel 4a zur Bildung eines nicht weiter dargestellten Universalgelenks. Die einzelnen Abschnitte bzw. Teile der Lenkspindel 4 sind miteinander verdrehfest, aber relativ zueinander in Längsrichtung verschiebbar, vorzugsweise teleskopierbar angeordnet. Dies ist an sich bekannt, um die Lenkspindel 4 im Crashfall verkürzen zu können. Im Schnitt gemäß Fig. 4 sieht man die beiden verdrehfest ineinander eingreifenden Teile der Lenkspindel 4. Die Lagerung der Lenkspindel 4 in der Lenkspindellagereinheit 2 muss nicht näher erläutert werden. Geeignete Lagerarten sind beim Stand der Technik bekannt. Um ein hier nicht dargestelltes Lenkrad an der Lenkspindel 4 befestigen zu können, weist diese einen Lenkradanschluss 16 auf. Des Weiteren ist noch darauf hinzuweisen, dass der Teil der Lenkspindel 4, welcher den Lenkradanschluss 16 aufweist, so im lenkradseitigen Teil 17 der Lenkspindellagereinheit 2 drehbar gelagert ist, dass der genannte Teil der Lenkspindel 4 und der Teil 17 der Lenkspindellagereinheit 2 in Längsrichtung 36 nicht relativ zueinander verschiebbar sind. Im gezeigten Ausführungsbeispiel ist die Lenkspindellagereinheit 2 aus zwei relativ zueinander in Längsrichtung 36 also entlang der Lenkspindellängsachse 3 verschiebbaren, hier ebenfalls teleskopartig ineinandergreifenden Teilen 17 und 18 gebildet. Das Teil 17 weist zum Lenkradanschluss 16. Das Teil 18 führt zur Lenkunterstützungseinheit 19. Letztere kann, wie beim Stand der Technik an sich bekannt, ausgebildet sein. Dabei kann die Lenkunterstützung 19 sowohl eine Übersetzung des mittels Lenkrades in die Lenkspindel 4 eingebrachten Lenkwinkels bewirken, wie dies unter dem Begriff Überlagerungslenkung bekannt ist, als auch eine Drehmomentunterstützung bewirken, wie dies unter dem Begriff Servolenkung bekannt ist. Solche Lenkunterstützungen 19 sind beim Stand der Technik bekannt und müssen hier nicht weiter erläutert werden. Die Erfindung ist jedoch auch auf Lenksäulen ohne Lenkunterstützung anwendbar. Die Erfindungsgemäße Lenksäule kann auch in Steer-by-wire Lenksystemen oder in Lenksystemen, bei denen die Lenksunterstützung an einer anderen Position im Kraftfahrzeug erfolgt, beispielsweise im Lenkgetriebe, eingesetzt werden.

Die Lenkspindel 4 kann auch im Teil 18 der Lenkspindellagereinheit 2 drehbar gelagert sein. Wird die Lenkspindel 4 anderweitig drehbar gelagert, so kann aber sowohl die Lagerung im Teil 18 als auch das Teil 18 der Lenkspindellagereinheit 2 komplett entfallen.

Die Trageinheit 5 kann mittels der Befestigungslaschen 21 an der Karosserie des Kraftfahrzeuges befestigt werden. Sie dient als Träger der Lenkspindellagereinheit 2. Im gezeigten Ausführungsbeispiel ist die Lenkspindellagereinheit 2 nicht direkt sondern mittelbar unter Zwischenschaltung des Schlittens 13 und des Zwischenteils 23 an der Trageinheit 5 gehalten. Zwischen dem Schlitten 13 und der Trageinheit 5 ist in an sich bekannter Weise ein Energieaufzehrungselement 14 angeordnet, welches dem Abbau von Stoßenergie im Crashfall, also im Falle einer Fahrzeugkollision, dient. Als Energieaufzehrungselement 14 kommen dabei grundsätzlich alle beim Stand der Technik bekannten Arten solcher Elemente in Frage. Im gezeigten Ausführungsbeispiel ist das Energieaufzehrungselement 14 in Form einer Biegelasche ausgebildet. Der eine Schenkel der Biegelasche ist an der Trageinheit 5 fixiert. Der andere Schenkel der Biegelasche ist am Schlitten 13 fixiert. Im Crashfall wird der Schlitten 13 zusammen mit der Lenkspindellagereinheit 2 und der Lenkspindel 4 in Richtung hin zu den Vorderrädern des Fahrzeugs, also in Richtung hin zu den Befestigungslaschen 21 verschoben, wobei durch entsprechende Deformation, sowie eventuell mit einer zusätzlichen einhergehenden Zerspanung, des Energieaufzehrungselementes 14 die Stoßenergie abgebaut wird.

Zur Höhenverstellung in Höhenrichtungen 37 ist die Lenkspindellagereinheit 2 zusammen mit der Lenkspindel 4 schwenkbar um die Schwenkachse 20 an der Trageinheit 5 aufgehängt. Im gezeigten Ausführungsbeispiel erfolgt diese schwenkbare Aufhängung über die Schwinge 22 und die Lenkunterstützung 19 sowie das dazu getrennt am Schlitten 13 aufgehängte Zwischenteil 23. Dies ist natürlich nur ein Beispiel und kann auch ganz anders ausgeführt werden. Zur Höhenverstellung selbst ist die Lenkspindellagereinheit 2 nicht direkt sondern unter Zwischenschaltung des Zwischenteils 23 am Schlitten 13 befestigt. Das Zwischenteil 23 kann zusammen mit der Lenkspindellagereinheit 2 und damit auch mit der Lenkspindel 4 in Höhenrichtungen 37 relativ zum Schlitten 13 verstellt werden. Damit es während dieser Höhenverstellung nicht zu einem Verkanten des Zwischenteiles 23 im Schlitten 13 kommt, ist in diesem Ausführungsbeispiel eine Langlochführung vorgesehen. Diese ist besonders gut in der Seitenansicht gemäß Fig. 3 zu sehen. Es handelt sich um eine langlochartige Führungsnut 30 im Schlitten 13, in der ein Führungszapfen 29 des Zwischenteils 23 verschiebbar geführt ist. Es ist denkbar und möglich, eine derartige Führung in anderer Weise auszubilden oder, falls sie nicht benötigt wird, darauf zu verzichten. Zur Höhenverstellung selbst dient der Höhenverstellmotor 26, welcher eine der Höhenverstellspindeln 24 direkt und die andere Höhenverstellspindel 24 über den Zahnriemen 25 indirekt antreibt. Die Höhenverstellspindeln 24 greifen mit ihrem Gewinde jeweils in eine der Höhenverstellmuttern 27 ein. Diese Höhenverstellmuttern 27 sind jeweils am Schlitten 13 fixiert. All dies ist am Besten im Schnitt der Fig. 4 entlang der Schnittlinie AA aus Fig. 3 zu sehen. Durch Drehung des Höhenverstellmotors 26 werden beide Höhenverstellspindeln 24 gedreht. Durch ihren Gewindeeingriff in die Höhenverstellmuttern 27 kommt es je nach Drehrichtung der Höhenverstellspindeln 24 zu einer Aufwärts- oder Abwärtsbewegung in Höhenrichtung 37, womit das Zwischenteil 23 zusammen mit der Lenkspindellagereinheit 2 und der Lenkspindel 4 im Schlitten 13 angehoben oder abgesenkt und damit die gewünschte Höhenverstellung in Höhenrichtung 37 realisiert wird. Im gezeigten Ausführungsbeispiel werden zwei Höhenverstellspindeln 24, eine rechts und eine links vom Schlitten 13 eingesetzt, um ein seitliches Verkippen des Zwischenteils 23 im Schlitten 13 zu vermeiden. Bei der Realisierung entsprechender Führungen kann natürlich auch auf eine der Höhenverstellspindeln 24 verzichtet werden. Andere Ausbildungen der Höhenverstellung, wie sie im Stand der Technik allgemein bekannt sind, sind denkbar und möglich, und können mit der erfindungsgemäßen Lenksäule kombiniert werden.

Zur Realisierung der erfindungsgemäßen Längenverstellung in Richtung der Längsrichtungen 36 bzw. entlang der Lenkspindellängsachse 3 ist vorgesehen, dass die Lenkspindellagereinheit 2 ein Gewinde 6 aufweist, welches im gezeigten Ausführungsbeispiel als ein außen an der Lenkspindellagereinheit 2 angeordnetes Außengewinde realisiert ist. Die Lenkspindellagereinheit 2 und damit auch die Lenkspindel 4 sind für ihre Verstellung entlang der Längsspindellängsachse 3 relativ zur Trageinheit mittels eines Antriebsriemens 8 mit dem Motor 7 verbunden. Das Gewinde 6 ist im gezeigten Ausführungsbeispiel in Form von in Umfangsrichtung 9 der Lenkspindellagereinheit 2 voneinander distanzierten streifenförmig ausgebildeten Gewindeabschnitten 10 realisiert. Die streifenförmigen Gewindeabschnitte 10 sind durch Durchführungen 38 im Zwischenteil 23 hindurchgeführt. Das Zusammenwirken von Gewindeabschnitten 10 und Durchführungen 38 kann zusätzlich auch als Verdrehsicherung wirken, welche verhindert, dass sich die Lenkspindellagereinheit 2 bzw. ihr Teil 17, welcher das Gewinde 6 trägt, um die Lenkspindellängsachse 3 relativ zum Zwischenteil 23 verdreht. Es kann auch jede andere Art der Verdrehsicherung realisiert werden, z.B. eine Zapfen- bzw. Nut und Feder- Führung zwischen Lenkspindellagereinheit 2 bzw. deren Teil 17 und dem Zwischenteil 23.

Zur weiteren Erläuterung der erfindungsgemäßen Längsverstellung entlang der Lenkspindellängsachse 3 bzw. der Längsrichtung 36 wird nun insbesondere auf die Fig. 4 bis 8 verwiesen. Fig. 4 zeigt den Schnitt entlang der Schnittlinie AA aus Fig. 3.

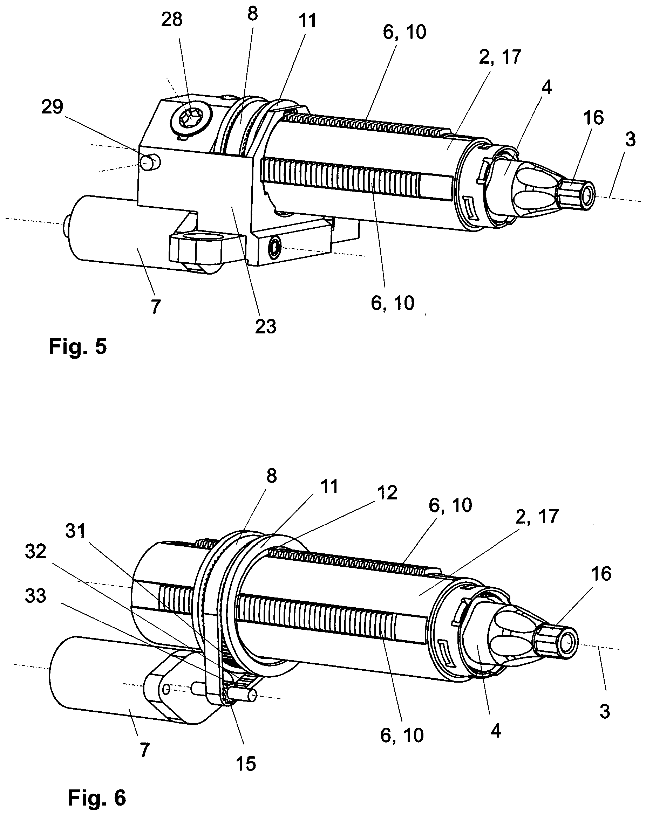

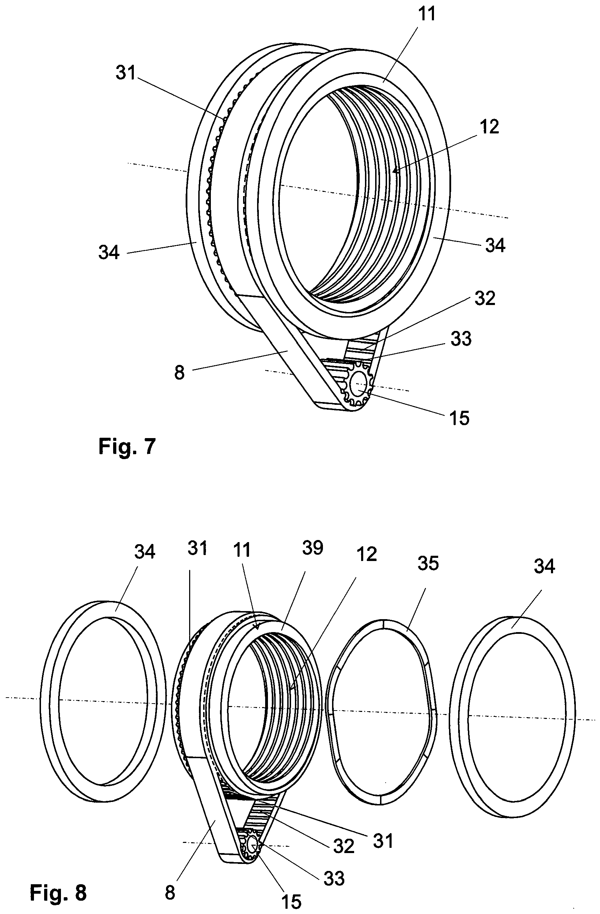

In Fig. 5 sind große Teile der Lenksäule 1 nicht dargestellt, so dass man das Zwischenteil 23, den Motor 7 und die Lenkspindellagereinheit 2 bzw. deren Teil 17 gut sieht. In Fig. 6 ist dann auch noch das Zwischenteil 23 weggelassen. Die Fig. 7 und 8 zeigen nur noch die Mutter 11 mit dem Antriebsriemen 8 und dem Antriebsrotor 15 des Motors 7.

Die Lenkspindellagereinheit 2 bzw. deren Teil 17 ist im gezeigten Ausführungsbeispiel durch die Mutter 11 hindurchgeführt, wobei ein an der Mutter 11 realisiertes Innengewinde 12 in das in Form der Gewindeabschnitte 10 ausgebildete Außengewinde 6 der Lenkspindellagereinheit 2 bzw. dessen Teiles 17 eingreift. Die Mutter 11 ist mittels des Antriebsriemens 8 drehbar. Hierzu greift der Motor 7 mit seinem Antriebsrotor 15 am Antriebsriemen 8 an, bzw. in diesen ein. Im gezeigten Ausführungsbeispiel trägt die Mutter 11 für das Zusammenwirken mit dem Antriebsriemen 8 eine Außenverzahnung 31, in die die Riemenverzahnung 32 eingreift. In diesem Ausführungsbeispiel trägt auch der Antriebsrotor 15 eine entsprechende Außenverzahnung 33, um in die Riemenverzahnung 32 ebenfalls formschlüssig eingreifen zu können. Alternativ kann die Drehbewegung des Motors 7 bzw. seines Antriebsrotors 15 auf die Mutter 11 stattfinden auf andere Weise erfolgen. Wenn für entsprechende Reibungskräfte gesorgt wird, können z.B. auch die Riemenverzahnung 32 sowie die Außenverzahnungen 31 und 33 entfallen. Auch der Einsatz einer Antriebskette als Ersatz für den Antriebsriemen 8 ist möglich. Der Einsatz eines Zahnriemens ist jedoch zu bevorzugen, da er sehr geräuscharm im Betrieb ist und nur ein geringes Gewicht aufweist und auch bei relativ geringen Toleranzanforderungen ausreichend hohe Drehmomente übertragen kann.

Die Mutter 11 ist abgesehen vom Crashfall in ihrer Position entlang der Lenkspindellängsachse 3, also entlang der Längsrichtung 36, nicht verstellbar. Im gezeigten Ausführungsbeispiel ist sie hierfür in einer entsprechend in Längsrichtung 36 begrenzten Ausnehmung im Zwischenteil 23 drehbar gelagert. Dies stellt sicher, dass beim Drehen der Mutter 11 das Teil 17 der Lenkspindellagereinheit 2 in Längsrichtung 36 verschoben wird, während die Mutter 11 in dieser Richtung gesehen, ruht.

Die in Fig. 5 dargestellte Spieleinstellung 28 dient dazu, das Spiel der Lenkspindellagereinheit 2 bzw. deren Teil 17 im Zwischenteil 23 auf das nötige Maß zu beschränken bzw. entsprechend einstellen zu können.

Im gezeigten Ausführungsbeispiel trägt die Mutter 11 zwei Führungsringe 34, als Axiallager, und einen Federring 35, welcher zumindest einen der Führungsringe 34 in Richtung der Lenkspindellängsachse 3 gegen den Grundkörper 39 der Mutter 11 vorspannt. Dies dient zur Spielfreistellung der Mutter 11 in Längsrichtungen 36 im Zwischenteil 23. Diese Art der Spielfreistellung kann evtl. entfallen oder auch in anderer Art und Weise ausgebildet sein. Die Führungsringe 34 können neben der Funktion der axialen Lagerung auch die Funktion der radialen Lagerung übernehmen. Dabei ist ist auch denkbar und möglich die axiale und/oder radiale Lagerung durch Wälzlager darzustellen, die dann auch die Führungsringe ersetzen können.

**Legende zu den Hinweisziffern:**

| | | | |
|---|---|---|---|
| 1 | Lenksäule | 20 | Schwenkachse |
| 2 | Lenkspindellagereinheit | 21 | Befestigungslasche |
| 3 | Lenkspindellängsachse | 22 | Schwinge |
| 4 | Lenkspindel | 23 | Zwischenteil |
| 4a | Gabel | 24 | Höhenverstellspindel |
| 5 | Trageinheit | 25 | Zahnriemen |
| 6 | Gewinde | 26 | Höhenverstellmotor |
| 7 | Motor | 27 | Höhenverstellmutter |
| 8 | Antriebsriemen | 28 | Spieleinstellung |
| 9 | Umfangsrichtung | 29 | Führungszapfen |
| 10 | Gewindeabschnitt | 30 | Führungsnut |
| 11 | Mutter | 31 | Außenverzahnung |
| 12 | Innengewinde | 32 | Riemenverzahnung |
| 13 | Schlitten | 33 | Außenverzahnung |
| 14 | Energieaufzehrungselement | 34 | Führungsring |
| 15 | Antriebsrotor | 35 | Federring |
| 16 | Lenkradanschluss | 36 | Längsrichtung |
| 17 | Teil | 37 | Höhenrichtung |
| 18 | Teil | 38 | Durchführung |
| 19 | Lenkunterstützung | 39 | Grundkörper |

## Patentansprüche

1. Lenksäule (1) für ein Kraftfahrzeug, wobei die Lenksäule (1) eine Lenkspindellagereinheit (2) und eine, in der Lenkspindellagereinheit (2) um eine Lenkspindellängsachse (3) drehbar gelagerte Lenkspindel (4) und eine, zur Befestigung der Lenksäule (1) im Kraftfahrzeug vorgesehene Trageinheit (5), an der die Lenkspindellagereinheit (2) gehalten ist, aufweist und die Lenkspindellagereinheit (2) ein Gewinde (6) aufweist und mittels eines Motors (7) entlang der Lenkspindellängsachse (3) relativ zur Trageinheit (5) verstellbar ist, **dadurch gekennzeichnet, dass** die Lenkspindellagereinheit (2) für ihre Verstellung entlang der Lenkspindellängsachse (3) relativ zur Trageinheit (5) mittels zumindest eines Antriebsriemens (8) oder zumindest einer Antriebskette mit dem Motor (7) verbunden ist und eine Mutter (11) in das Gewinde (6) eingreift und entweder diese Mutter (11) mittels des Antriebsriemens (8) oder der Antriebskette um die Lenkspindellängsachse (3) drehbar ist, oder diese Mutter (11) drehfest an der Trageinheit (5) oder in anderer Weise drehfest am Kraftfahrzeug befestigt ist und die Lenkspindellagereinheit (2) eine um die Lenkspindellängsachse (3) drehbar gelagerte Hülse aufweist, welche das Gewinde (6) der Lenkspindellagereinheit (2) trägt, wobei die Hülse in Richtung der Lenkspindellängsachse (3) gegenüber den anderen Teilen der Lenkspindellagereinheit (2) nicht verschiebbar ist, wobei die Hülse mittels des Antriebsriemens (8) oder der Antriebskette vom Motor (7) antreibbar ist.

2. Lenksäule (1) nach Anspruch 1, **dadurch gekennzeichnet, dass** das Gewinde (6) ein außen an der Lenkspindellagereinheit (2) angebrachtes Außengewinde ist.

3. Lenksäule (1) nach Anspruch 1 oder 2, **dadurch gekennzeichnet, dass** das Gewinde (6) in Form von in Umfangsrichtung (9) der Lenkspindellagereinheit (2) voneinander distanzierten, vorzugsweise streifenförmigen, Gewindeabschnitten (10) ausgebildet ist.

4. Lenksäule (1) nach einem der Ansprüche 1 bis 3, **dadurch gekennzeichnet, dass** die Mutter (11) ein Innengewinde (12) aufweist und mit diesem Innengewinde (12) in das Gewinde (6) der Lenkspindellagereinheit (2) eingreift und/oder dass die Lenkspindellagereinheit (2) durch die Mutter (11) hindurchgeführt ist.

5. Lenksäule (1) nach einem der Ansprüche 1 bis 4, **dadurch gekennzeichnet, dass** das Gewinde (6) an der Lenkspindellagereinheit (2) unverdrehbar fix angeordnet ist.

6. Lenksäule (1) nach einem der Ansprüche 1 bis 5, **dadurch gekennzeichnet, dass** die Lenkspindellagereinheit (2) mittels einer Verdrehsicherung bezüglich der Lenkspindellängsachse (3) relativ zur Trageinheit (5) unverdrehbar in der Trageinheit (5) gelagert ist.

7. Lenksäule (1) nach einem der Ansprüche 1 bis 6, **dadurch gekennzeichnet, dass** die Lenkspindellagereinheit (2) unter Zwischenschaltung eines Schlittens (13) an der Trageinheit (5) gehalten ist, wobei der Schlitten (13) mit der Lenkspindellagereinheit (2) unter Zwischenschaltung eines Energieaufzehrungselementes (14) für den Crashfall verschiebbar an der Trageinheit (5) gelagert ist.

8. Lenksäule (1) nach einem der Ansprüche 1 bis 7, **dadurch gekennzeichnet, dass** der Motor (7) einen Antriebsrotor (15) aufweist, mit dem er am Antriebsriemen (8) oder an der Antriebskette angreift.

9. Lenksäule (1) nach einem der Ansprüche 1 bis 8, **dadurch gekennzeichnet, dass** die Lenkspindellagereinheit (2) mehrteilig ausgebildet ist, wobei die Teile (17, 18) der Lenkspindellagereinheit (2) in Richtung der Lenkspindellängsachse (3) teleskopierbar ineinandergreifend angeordnet sind und das einem Lenkradanschluss (16) der Lenkspindel (4) am nächsten liegende Teil (17) der Lenkspindellagereinheit (2) das Gewinde (6) aufweist.

## Claims

1. Steering column (1) for a motor vehicle, wherein the steering column (1) has a steering spindle bearing unit (2) and a steering spindle (4), which is mounted in the steering spindle bearing unit (2) so as to be rotatable about a steering spindle longitudinal axis (3), and a supporting unit (5) which is provided for the fastening of the steering column (1) in the motor vehicle and on which the steering spindle bearing unit (2) is held, and the steering spindle bearing unit (2) has a thread (6) and can be adjusted along the steering spindle longitudinal axis (3) relative to the supporting unit (5) by way of a motor (7), **characterized in that** the steering spindle bearing unit (2), for its adjustment along the steering spindle longitudinal axis (3) relative to the supporting unit (5), is connected by means of at least one drive belt (8) or at least one drive chain to the motor (7) and a nut (11) engages into the thread (6), and either said nut (11) can be rotated about the steering spindle longitudinal axis (3) by means of the drive belt (8) or the drive chain, or said nut (11) is fastened rotationally conjointly to the supporting unit (5) or rotationally conjointly in some other way to the motor vehicle and the steering spindle bearing unit (2) has a sleeve which is mounted so as to be rotatable about the steering spindle longitudinal axis (3) and which bears the thread (6) of the steering spindle bearing unit (2), wherein the sleeve is non-displaceable in the direction of the steering spindle longitudinal axis (3) relative to the other parts of the steering spindle bearing unit (2), wherein the sleeve can be driven by the motor (7) via the drive belt (8) or the drive chain.

2. Steering column (1) according to Claim 1, **characterized in that** the thread (6) is an external thread formed on the outside of the steering spindle bearing unit (2).

3. Steering column (1) according to Claim 1 or 2, **characterized in that** the thread (6) is in the form of preferably strip-shaped thread sections (10) which are spaced apart from one another in a circumferential direction (9) of the steering spindle bearing unit (2).

4. Steering column (1) according to one of Claims 1 to 3, **characterized in that** the nut (11) has an internal thread (12) and engages by way of said internal thread (12) into the thread (6) of the steering spindle bearing unit (2), and/or **in that** the steering spindle bearing unit (2) is guided through the nut (11).

5. Steering column (1) according to one of Claims 1 to 4, **characterized in that** the thread (6) is arranged fixedly and non-rotatably on the steering spindle bearing unit (2).

6. Steering column (1) according to one of Claims 1 to 5, **characterized in that** the steering spindle bearing unit (2) is mounted in the supporting unit (5), so as to be non-rotatable relative to the supporting unit (5), by way of a means for preventing rotation about the steering spindle longitudinal axis (3).

7. Steering column (1) according to one of Claims 1 to 6, **characterized in that** the steering spindle bearing unit (2) is held on the supporting unit (5) with the interposition of a carriage (13), wherein the carriage (13) with the steering spindle bearing unit (2) is mounted displaceably on the supporting unit (5) with the interposition of an energy-absorbing element (14) for a crash situation.

8. Steering column (1) according to one of Claims 1 to 7, **characterized in that** the motor (7) has a drive rotor (15) by which it engages on the drive belt (8) or on the drive chain.

9. Steering column (1) according to one of Claims 1 to 8, **characterized in that** the steering spindle bearing unit (2) is of multi-part form, wherein the parts (17, 18) of the steering spindle bearing unit (2) are arranged so as to engage one inside the other in telescopic fashion in the direction of the steering spindle longitudinal axis (3), and that part (17) of the steering spindle bearing unit (2) which is situated closest to a steering wheel connection (16) of the steering spindle (4) has the thread (6).

## Revendications

1. Colonne de direction (1) pour un véhicule automobile, la colonne de direction (1) présentant une unité de palier d'arbre de direction (2) et un arbre de direction (4) supporté dans l'unité de palier d'arbre de direction (2) de manière à pouvoir tourner autour d'un axe longitudinal d'arbre de direction (3) et une unité de support (5) prévue pour la fixation de la colonne de direction (1) dans le véhicule automobile, sur laquelle est retenue l'unité de palier d'arbre de direction (2), et l'unité de palier d'arbre de direction (2) présentant un filetage (6) et pouvant être réglée par rapport à l'unité de support (5) au moyen d'un moteur (7) le long de l'axe longitudinal d'arbre de direction (3), **caractérisée en ce que** l'unité de palier d'arbre de direction (2), pour son réglage le long de l'axe longitudinal d'arbre de direction (3) par rapport à l'unité de support (5), est connectée au moteur (7) au moyen d'au moins une courroie d'entraînement (8) ou d'au moins une chaîne d'entraînement et un écrou (11) s'engage dans le filetage (6), et soit cet écrou (11) peut tourner autour de l'axe longitudinal d'arbre de direction (3) au moyen de la courroie d'entraînement (8) ou de la chaîne d'entraînement, soit cet écrou (11) est fixé de manière solidaire en rotation sur l'unité de support (5) ou est fixé de manière solidaire en rotation d'une autre manière sur le véhicule automobile et l'unité de palier d'arbre de direction (2) présente une douille supportée de manière à pouvoir tourner autour de l'axe longitudinal d'arbre de direction (3), qui porte le filetage (6) de l'unité de palier d'arbre de direction (2), la douille ne pouvant pas être déplacée dans la direction de l'axe longitudinal d'arbre de direction (3) par rapport aux autres parties de l'unité de palier d'arbre de direction (2), la douille pouvant être entraînée au moyen de la courroie d'entraînement (8) ou de la chaîne d'entraînement par le moteur (7).

2. Colonne de direction (1) selon la revendication 1, **caractérisée en ce que** le filetage (6) est un filetage extérieur monté à l'extérieur sur l'unité de palier d'arbre de direction (2).

3. Colonne de direction (1) selon la revendication 1 ou 2, **caractérisée en ce que** le filetage (6) est réalisé sous forme de portions filetées (10) espacées les unes des autres, de préférence en forme de bandes, dans la direction périphérique (9) de l'unité de palier d'arbre de direction (2).

4. Colonne de direction (1) selon l'une quelconque des revendications 1 à 3, **caractérisée en ce que** l'écrou (11) présente un filetage intérieur (12) et s'engage avec ce filetage intérieur (12) dans le filetage (6) de l'unité de palier d'arbre de direction (2) et/ou **en ce que** l'unité de palier d'arbre de direction (2) est guidée à travers l'écrou (11).

5. Colonne de direction (1) selon l'une quelconque des revendications 1 à 4, **caractérisée en ce que** le filetage (6) est disposé de manière fixe et non rotative sur l'unité de palier d'arbre de direction (2).

6. Colonne de direction (1) selon l'une quelconque des revendications 1 à 5, **caractérisée en ce que** l'unité de palier d'arbre de direction (2) est supportée de manière non rotative par rapport à l'unité de support (5) dans l'unité de support (5) au moyen d'une fixation antirotation vis-à-vis de l'axe longitudinal d'arbre de direction (3).

7. Colonne de direction (1) selon l'une quelconque des revendications 1 à 6, **caractérisée en ce que** l'unité de palier d'arbre de direction (2) est retenue sur l'unité de support (5) en interposant un chariot (13), le chariot (13) avec l'unité de palier d'arbre de direction (2) étant supportés de manière déplaçable en cas de collision sur l'unité de support (5) par interposition d'un élément d'épuisement d'énergie (14).

8. Colonne de direction (1) selon l'une quelconque des revendications 1 à 7, **caractérisée en ce que** le moteur (7) présente un rotor d'entraînement (15) avec lequel il vient en prise avec la courroie d'entraînement (8) ou avec la chaîne d'entraînement.

9. Colonne de direction (1) selon l'une quelconque des revendications 1 à 8, **caractérisée en ce que** l'unité de palier de d'arbre de direction (2) est réalisée en plusieurs parties, les parties (17, 18) de l'unité de palier d'arbre de direction (2) étant disposées de manière à s'engager l'une dans l'autre de manière télescopique dans la direction de l'axe longitudinal d'arbre de direction (3) et l'un des raccords de volant de direction (16) de l'arbre de direction (4) présentant le filetage (6) au niveau de la partie suivante (17) de l'unité de palier d'arbre de direction (2).
